# EUROPEAN PATENT APPLICATION

(11) **EP 4 782 169 A1**
(43) Date of publication of application: **29.07.2026**
(21) Application number: 26152890.5
(22) Date of filing: 20.01.2026
(51) Int. Cl.: B27B 17/12

(54) **CHAINSAW WITH OIL PUMP**

(30) Priority: 27.01.2025 US 202519038224
(71) Applicant: Black & Decker, Inc., New Britain, CT 06053 (US)
(72) Inventor: BEYER, Joseph A., Elkridge, 21075 (US); PUZZITIELLO, Randall J., Idlewylde, 21239 (US); XENOS, Tyler, Baltimore, 21212 (US); ESHELMAN, Samuel B., Fallston, 21047 (US)
(74) Representative: SBD IPAdmin

(57) **Abstract**

According to examples, a power equipment (100) may include a base member (110), a drive shaft (220) to drive a cutting chain (114) over a chain bar (112), and an oil tank (120) mounted to the base member (110). A first portion (202) of an oil pump (200), an inlet hose (206), and an outlet hose (122) may be housed within the oil tank (120), in which the inlet hose (206) may supply oil contained in the oil tank (120) to the first portion (202) of the oil pump (200) and the outlet hose (122) may supply oil from the first portion (202) of the oil pump (200) to the cutting chain (114). By housing the first portion (202) of the oil pump (200), the inlet hose (206), and the outlet hose (122) within the oil tank (120), the size of a cutting head (102) of the power equipment (100) may significantly be reduced while also reducing the likelihood of the cutting head (102) snagging objects, such as tree limbs or branches.

## Description

### FIELD

The present disclosure is directed to power equipment having compact cutting heads. Particularly, the present disclosure is directed to a power equipment, e.g., a chainsaw, in which a portion of an oil pump, an inlet hose, and an outlet hose are housed within an oil tank to reduce a size of the cutting head of the power equipment.

### BACKGROUND

Power equipment, such as chainsaws, are often employed to cut or trim branches, limbs, and trunks of trees and bushes. The power equipment may include cutting heads having cutting chains to cut the objects. Some types of power equipment position the cutting heads on extension poles to enable the power equipment to be employed to cut or trim branches that are located at distances that may be out of an operator's reach through use of power equipment that do not have extension poles.

### SUMMARY

This section provides a general summary of the disclosure, and is not a comprehensive disclosure of its full scope or all of its features.

According to embodiments disclosed herein, a power equipment may include a base member and a drive shaft to drive a cutting chain over a chain bar, in which the chain bar is attached to the base member. The power equipment may also include an oil tank having an external edge that forms an open side of the oil tank, in which the oil tank is mounted to the base member. The power equipment may further include a first portion of an oil pump positioned within an interior of the oil tank, an inlet hose housed within the oil tank, in which the inlet hose may supply oil contained in the oil tank to the first portion of the oil pump, and an outlet hose housed within the oil tank, in which the outlet hose may supply oil from the first portion of the oil pump to the cutting chain.

The open side of the oil tank may face the base member. A gasket may be positioned between the external edge and the base member. The gasket may be configured to form a liquid tight seal between the external edge and the base member. The oil tank may comprise an oil pump hole through which the first portion of the oil pump extends from an exterior of the oil tank to an interior of the oil tank. An exterior surface of the oil pump may interface with the oil pump hole and seal the oil pump hole. The power equipment may further comprise an extension portion adjacent to the oil pump hole on an exterior of the oil tank, and an O-ring gasket positioned within the extension portion and in contact with the exterior surface of the oil pump. The O-ring gasket may provide additional leak prevention from the oil tank. The drive shaft may be configured to cause a second portion of the oil pump to rotate, wherein rotation of the second portion causes oil in the oil tank to be pumped from the inlet hose and through the outlet hose. More specifically, rotation of the second portion of the oil pump may cause the first portion of the oil pump to rotate, and rotation of the first portion may cause oil in the oil tank to be pumped from the inlet hose and through the outlet hose. The power equipment may further comprise an opening through which oil is to be provided into the oil tank, and a removable cap for closing the opening. The power equipment may be a chainsaw and an end of the outlet hose may be positioned adjacent the cutting chain to supply oil from the oil tank to the cutting chain. The power equipment may be a pole chainsaw.

According to embodiments disclosed herein, a chainsaw may include a base member, a cutting chain, a chain bar positioned on a first side of the base member, in which the cutting chain is to be driven over the chain bar, an oil tank positioned on a second side of the base member, and a first portion of an oil pump positioned within an interior of the oil tank. The chainsaw may also include an inlet hose entirely housed within the oil tank, in which the inlet hose may supply oil contained in the oil tank to the first portion of the oil pump. The chainsaw may further include an outlet hose entirely housed within the oil tank, in which the outlet hose may supply oil from the oil pump to the cutting chain.

The oil tank may comprise an external edge that forms an open side of the oil tank, and the open side of the oil tank may face the base member. The chainsaw may further comprise a gasket positioned between the external edge and the base member. The gasket may be configured to form a liquid tight seal between the external edge and the base member. The oil tank may further comprise an oil pump hole through which the first portion of the oil pump extends from an exterior of the oil tank to an interior of the oil tank. An exterior surface of the oil pump may interface with the oil pump hole and seal the oil pump hole. The chainsaw may further comprise an extension portion adjacent to the oil pump hole on an exterior of the oil tank, and an O-ring gasket positioned within the extension portion and in contact with the exterior surface of the oil pump. The O-ring gasket may provide additional leak prevention from the oil tank. The chainsaw may further comprise a drive shaft to drive the cutting chain over the chain bar. The drive shaft may be configured to cause a second portion of the oil pump to rotate, wherein rotation of the second portion causes oil in the oil tank to be pumped from the inlet hose and through the outlet hose. More specifically, rotation of the second portion of the oil pump may cause the first portion of the oil pump to rotate, and rotation of the first portion may cause oil in the oil tank to be pumped from the inlet hose and through the outlet hose. The chainsaw may further comprise an opening through which oil is to be provided into the oil tank, and a removable cap for closing the opening. The chainsaw may comprise a pole chainsaw.

According to embodiments disclosed herein, a pole chainsaw may include a cutting head, a handle; and a pole connecting the cutting head to the handle. The cutting head may include a base member, a cutting chain, a chain bar positioned on a first side of the base member, in which the cutting chain is to be driven over the chain bar, and an oil tank positioned on a second side of the base member, in which the oil tank may include an external edge that forms an open side of the oil tank, and the open side of the oil tank may face the base member. The cutting head may further include a first portion of an oil pump housed within an interior of the oil tank, an inlet hose nested within the oil tank, in which the inlet hose may supply oil contained in the oil tank to the first portion of the oil pump, and an outlet hose nested within the oil tank, in which the outlet hose may supply oil from the oil pump to the cutting chain.

The pole chainsaw may further comprise a gasket positioned between the external edge and the base member. The gasket may be configured to form a liquid tight seal between the external edge and the base member. The oil tank may further comprise an oil pump hole through which the first portion of the oil pump extends from an exterior of the oil tank to an interior of the oil tank. An exterior surface of the oil pump may interface with the oil pump hole and seal the oil pump hole. The oil tank may further comprise an extension portion adjacent to the oil pump hole on an exterior of the oil tank, and an O-ring gasket positioned within the extension portion and in contact with the exterior surface of the oil pump. The O-ring gasket may provide additional leak prevention from the oil tank. The pole chainsaw may further comprise a drive shaft configured to drive the cutting chain over the chain bar. The drive shaft may be configured to cause a second portion of the oil pump to rotate, wherein rotation of the second portion causes oil in the oil tank to be pumped from the inlet hose and through the outlet hose. More specifically, rotation of the second portion of the oil pump may cause the first portion of the oil pump to rotate, and rotation of the first portion may cause oil in the oil tank to be pumped from the inlet hose and through the outlet hose.

### BRIEF DESCRIPTION OF THE DRAWINGS

Features of the present disclosure are illustrated by way of example and not limited in the following figure(s), in which like numerals indicate like elements, in which:
FIG. 1A shows a front perspective view of a power equipment 100 having a compact cutting head, in accordance with an embodiment of the present disclosure;
FIGS. 1B and 1C, respectively, show partially exploded perspective views of the compact cutting head shown in FIG. 1A, in accordance with an embodiment of the present disclosure;
FIG. 2A shows a perspective view of a portion of the cutting head shown in FIGS. 1A-1C, in accordance with an embodiment of the present disclosure;
FIG. 2B shows a side view, partially in cross section, of the portion of the cutting head shown in FIG. 2A, according to an embodiment of the present disclosure;
FIG. 3 shows a top perspective view of a portion of the cutting head 102 shown in FIGS. 2A and 2B with some of the exterior components, including the base member, removed such that the internal components of the cutting head are visible, in accordance with an embodiment of the present disclosure; and
FIG. 4 shows a bottom perspective view of the handle of the power equipment shown in FIG. 1A, in accordance with an embodiment of the present disclosure.

### DETAILED DESCRIPTION

Power equipment, such as chainsaws and pole chainsaws, have cutting heads on which cutting chains are mounted. In many instances, the power equipment may be employed to cut branches that are positioned in relatively close proximities to other branches and leaves of trees and bushes. In other words, operators of the power equipment may maneuver the power equipment between the branches and leaves to reach and cut certain other branches. Conventional power equipment may include relatively large cutting heads, which may make it relatively difficult or cumbersome for the operator to maneuver the power equipment through relatively dense areas.

Disclosed herein are power equipment, such as chainsaws, pole chainsaws, or the like, that include relatively compact cutting heads. As discussed herein, the cutting heads may be made to be relatively compact by housing or nesting a portion of an oil pump, an inlet hose, and an outlet hose within an oil tank. Particularly, a first portion of the oil pump may be positioned within the oil tank and a second portion of the oil pump may be positioned outside of the oil tank such that rotation of the second portion may cause the first portion to be rotated and thus pump oil from the inlet hose and through the outlet hose. In addition, the cutting head may include multiple seals for interfaces between the oil pump and the oil tank to prevent oil in the oil tank from leaking out of the oil tank through the interfaces.

Through implementation of the features of the present disclosure to house the first portion of the oil pump, the inlet hose, and the outlet hose within the oil tank, the size of the cutting head of the power equipment may be reduced or minimized, e.g., to be compact. As a result, the cutting head may be maneuvered through relatively densely positioned tree branches and leaves.

Also disclosed herein are power equipment having tool storage areas in which tools, such as wrenches, may removably but securely be supported for ready access to the tools. Particularly, the tool storage areas may include a number of features to hold the tools in place as the power equipment is moved into any of a number of various orientations.

Before continuing, it is noted that as used herein, the terms "includes" and "including" mean, but are not limited to, "includes" or "including" and "includes at least" or "including at least." The term "based on" means, but is not limited to, "based on" and "based at least in part on."

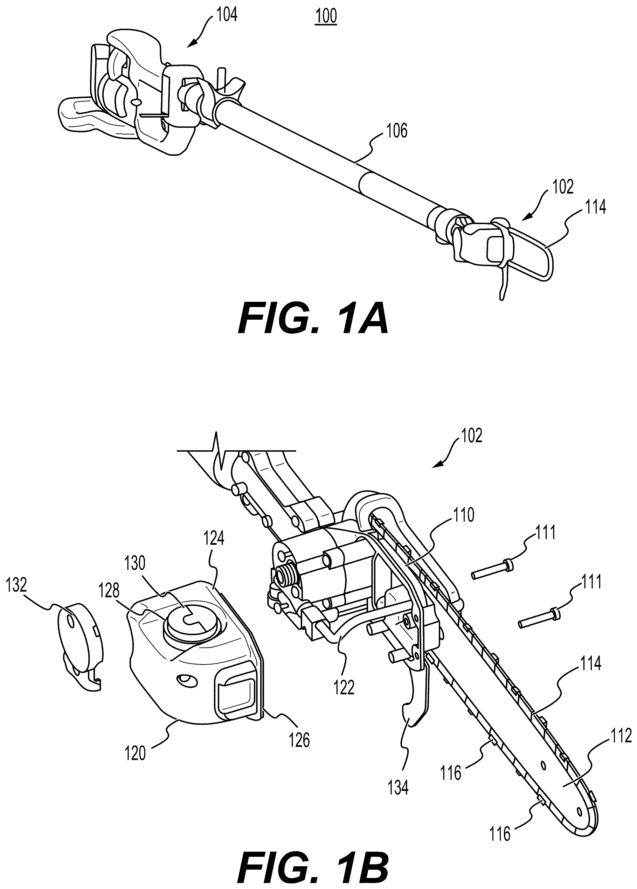

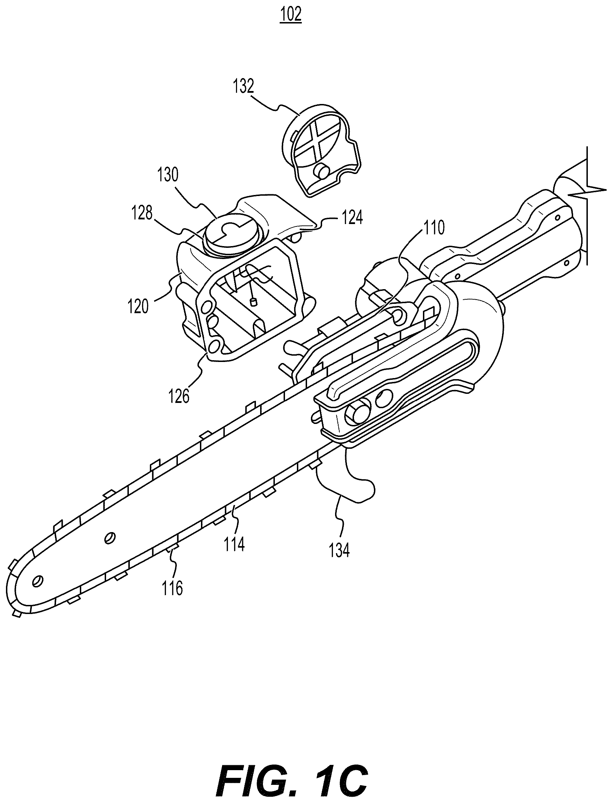

FIG. 1A shows a front perspective view of a power equipment 100 having a compact cutting head 102, in accordance with an embodiment of the present disclosure. FIGS. 1B and 1C, respectively, show partially exploded perspective views of the compact cutting head 102 shown in FIG. 1A, in accordance with an embodiment of the present disclosure. It should be understood that the power equipment 100 depicted in FIGS. 1A-1C may include additional components and that some of the components described herein may be removed and/or modified without departing from the scope of the power equipment 100 disclosed herein.

As shown in FIG. 1A, the power equipment 100 may be a chainsaw, a pole chainsaw, or the like. In some examples, the power equipment 100 may include a handle 104 and a pole 106 connecting the cutting head 102 to the handle 104. The handle 104 may include ergonomic features that enable an operator to grasp, maneuver, and operate the power equipment 100. The handle 104 may also house various components for powering the power equipment 100, for driving a cutting chain 114 of the power equipment, and for controlling the operation of the power equipment 100.

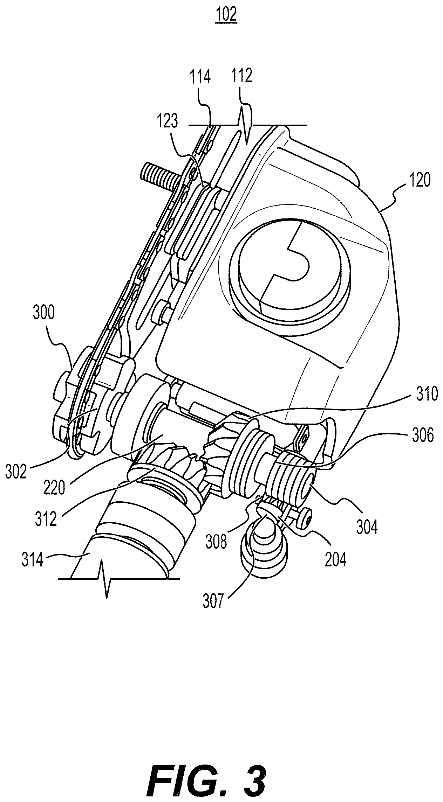

For instance, the handle 104 may house a motor for driving the cutting chain 114, an interface for a battery, a trigger and electronic components to control the rotational speed of the motor, etc. In addition, the pole 106 may house a driving mechanism 314 (FIG. 3) that conveys rotational motion of a motor (not shown) in the handle 104 to rotational movement of a drive shaft 220 (FIG. 3) that causes the cutting chain 114 to rotate. As discussed in greater detail herein, the power equipment 100 may include a gearing system that converts rotational motion of the driving mechanism 314 into rotational motion of the drive shaft 220.

According to examples, the power equipment 100 may be employed to cut or trim tree limbs, branches, or the like, that may be positioned at distances away from an operator of the power equipment 100, e.g., a few feet away from the operator. In many instances, the operator may use the power equipment 100 to trim branches that are in relatively tight spaces, e.g., tree limbs that are positioned in close proximity to other tree limbs. As discussed in greater detail herein, the cutting head 102 of the power equipment 100 may have a relatively compact size to enable the cutting head 102 to be maneuvered in those relatively tight spaces. In addition, components of the cutting head 102 may be housed internally to the cutting head 102 without requiring the use of additional covers, which may both reduce the size of the cutting head 102 and reduce the likelihood of those components being caught on other tree limbs.

As shown in FIGS. 1B and 1C, the cutting head 102 may include a base member 110, which may provide a supporting structure or frame to which some of the components of the cutting head 102 may be attached. For instance, a chain bar 112 may be attached to a first side of the base member 110 and the cutting chain 114 may be positioned on the chain bar 112. The cutting chain 114 may include a number of cutting elements 116 that may cut through objects, such as tree limbs, branches, or the like, as the cutting chain 114 is moved at a relatively rapid rate over the chain bar 112. As discussed in greater detail herein, the cutting chain 114 may be connected to the drive shaft 220 such that rotation of the drive shaft 220 causes the cutting chain 114 to move along the chain bar 112.

During operation of the power equipment 100, a lubricating oil may be provided to the cutting chain 114. The lubricating oil, or simply referenced herein as oil, may reduce friction between the cutting chain 114 and the chain bar 112. In some instances, the oil may continuously be supplied onto the cutting chain 114 during movement of the cutting chain 114 over the chain bar 112. As shown in FIG. 1B, the oil may be supplied from an oil tank 120 through an outlet hose 122 that has an end that is adjacent to the cutting chain 114. The oil tank 120 may be attached to the base member 110 at a second side of the base member 110. That is, the oil tank 120 may be attached to a side of the base frame that is opposite the side on which the chain bar 112 is attached.

As shown in FIGS. 1B and 1C, the oil tank 120 may include an external edge 124 that forms an open side of the oil tank 120. That is, most or all of the right side of the oil tank 120 as shown in FIG. 1B may be open such that the oil tank 120 may be positioned to cover the outlet hose 122 when the oil tank 120 is attached to the base member 110, e.g., by moving the oil tank 120 toward the base member 110. The open side of the oil tank 120 is shown in FIG. 1C.

In addition, the cutting head 102 may include a gasket 126 that may be positioned between the external edge 124 of the oil tank 120 and the base member 110 to provide a liquid tight seal between the oil tank 120 and the base member 110 when the oil tank 120 is tightly secured to the base member 110, for instance, through the use of fasteners 111. The oil tank 120 may also include an opening 128 through which oil may be supplied into the oil tank 120. The opening 128 may be closed by a removable cap 130. For instance, the opening 128 may include threads and the cap 130 may include mating threads to enable the cap 130 to removably seal the opening 128 by rotating the cap 130 clockwise or counterclockwise.

FIGS. 1B and 1C also show some additional components of the cutting head 102. For instance, the cutting head 102 may also include a cover 132 that may be positioned over other components of the cutting head 102. The cover 132 may be positioned over a portion of a pump and a drive shaft of the cutting head 102, in some examples. The cover 132 may be a decorative cover and/or may protect the components under the cover 132. The cutting head 102 may also include a branch hook 134 that a user may use to drag branches or limbs.

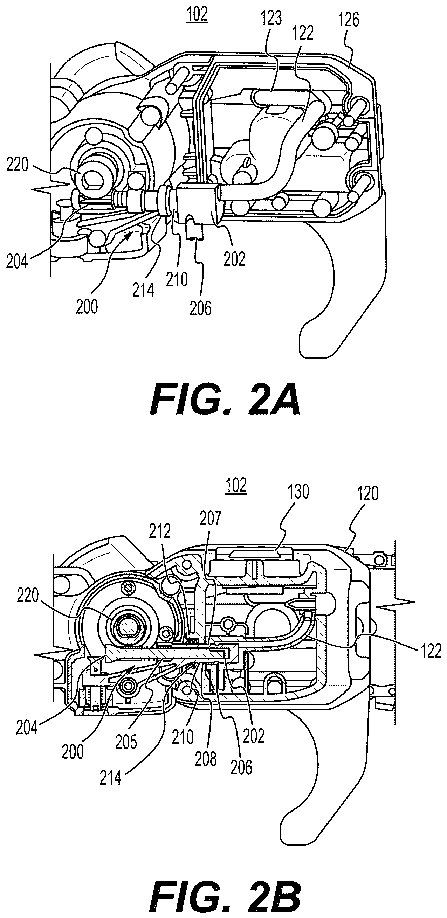

FIG. 2A shows a perspective view of a portion of the cutting head 102 shown in FIGS. 1A-1C, in accordance with an embodiment of the present disclosure. FIG. 2B shows a side view, partially in cross section, of the portion of the cutting head 102 shown in FIG. 2A, in accordance with an embodiment of the present disclosure. It should be understood that the cutting head 102 depicted in FIGS. 2A and 2B may include additional components and that some of the components described herein may be removed and/or modified without departing from the scope of the cutting head 102 disclosed herein.

FIG. 2A shows a portion of the cutting head 102 with the oil tank 120 and the cover 132 shown in FIGS. 1B and 1C removed. As such, the outlet hose 122 and the gasket 126 are visible in FIG. 2A. In addition, the outlet hose 122 is depicted as terminating at a grommet 123 from which oil from the oil tank 120 may be supplied to the cutting chain 114.

As shown in FIGS. 2A and 2B, the cutting head 102 may also include an oil pump 200 that is to push oil contained in the oil tank 120 through the outlet hose 122 to the grommet 123. Particularly, the oil pump 200 may include a first portion 202 that is positioned within an interior of the oil tank 120 and a second portion 204 that is positioned outside of the oil tank 120. The first portion 202 of the oil pump 200 may receive oil contained in the oil tank 120 through an inlet hose 206. Particularly, for instance, as the oil pump 200 rotates, the oil pump 200 pulls oil from the oil tank 120 through the inlet hose 206 and outputs the oil through the outlet hose 122 and to the cutting chain 114. In some examples, the inlet hose 206 and the outlet hose 122 are formed of a single continuous hose, while in other examples, the inlet hose 206 and the outlet hose 122 are formed of separate components.

As shown in FIGS. 2A and 2B, the first portion 202 of the oil pump 200, the inlet hose 206, and the outlet hose 122 are entirely housed (or equivalently, nested) within the oil tank 120. In this regard, none of these components pose potential snag risks and covers are not required to cover these components.

As shown in FIG. 2B, the oil tank 120 may include an oil pump hole 208 through which the oil pump 200 may extend, in which an exterior surface 210 of the oil pump 200 interfaces with the oil pump hole 208 and seals the oil pump hole 208. The oil tank 120 may also include an extension portion 212 positioned adjacent to and surrounding the oil pump hole 208. An O-ring gasket 214 may also be positioned within the extension portion 212 and in contact with the exterior surface 210 of the oil pump 200. The O-ring gasket 214 and the extension portion 212 may provide additional leak prevention from the oil tank 120 should oil leak through the interface between the oil pump hole 208 and the exterior surface 210 of the oil pump 200.

As also shown in FIGS. 2A and 2B, the cutting head 102 may include a drive shaft 220 to drive the cutting chain 114 over the chain bar 112. The drive shaft 220 may extend through the base member 110 such that the drive shaft 220 may also drive the oil pump 200. Particularly, for instance, the drive shaft 220 and the second portion 204 of the oil pump 200 may include mating gearing features such that rotation of the drive shaft 220 causes the oil pump 200 to rotate.

FIG. 3 shows a top perspective view of a portion of the cutting head 102 shown in FIGS. 2A and 2B with some of the exterior components, including the base member 110, removed such that the internal components of the cutting head 102 are visible, in accordance with an embodiment of the present disclosure. Initially, FIG. 3 shows the chain bar 112, cutting chain 114, and the grommet 123 through which oil from the outlet hose 122 may be delivered to the cutting chain 114. FIG. 3 also shows that the teeth of a chain sprocket 300 engages with the cutting chain 114 such that rotation of the chain sprocket 300 causes the cutting chain 114 to rotate with respect to the chain bar 112.

The chain sprocket 300 may be connected to a first end 302 of the drive shaft 220 in any suitable manner. In addition, a toothed component 304 may be connected to a second end 306 of the drive shaft 220 in any suitable manner. For instance, the chain sprocket 300 and/or the toothed component 304 may be adhered to the drive shaft 220 through welds and/or adhesives, may be mechanically attached to the drive shaft 220 through use of mechanical fasteners, and/or the like. The second portion 204 of the oil pump 200 may include teeth 308 such that rotation of the toothed component 304 may cause the oil pump 200 to rotate.

A drive shaft gear 310 may also be attached to the drive shaft 220 such that rotation of the drive shaft gear 310 causes the drive shaft 220 to rotate. The drive shaft gear 310 may be attached to the drive shaft 220 through any suitable attachment mechanism, such as through friction fit, through use of welds, through use of adhesives, through use of mechanical fasteners, and/or the like. The teeth of the drive shaft gear 310 may mate with the teeth of a mating gear 312, which may be attached to a driving mechanism 314 that a motor (not shown) may rotate. The driving mechanism 314 may be housed within the pole 106 of the power equipment 100. In any regard, rotation of the driving mechanism 314 may cause the drive shaft gear 310 to rotate, which in turn may cause the drive shaft 220 to rotate. In addition, rotation of the drive shaft 220 may cause the chain sprocket 300 and the toothed component 304 to rotate.

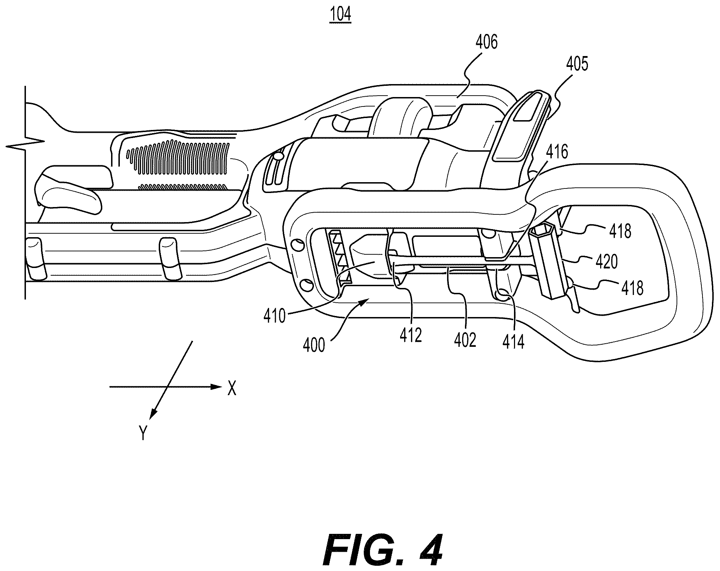

FIG. 4 shows a bottom perspective view of the handle 104 of the power equipment 100 shown in FIG. 1A, in accordance with an embodiment of the present disclosure. It should be understood that the handle 104 depicted in FIG. 4 may include additional components and that some of the components described herein may be removed and/or modified without departing from the scope of the handle 104 disclosed herein.

As shown in FIG. 4, the handle 104 may include a tool storage area 400 for removably storing a tool 402, that an operator may use to adjust the tension of the cutting chain 114. Particularly, an operator may use the tool 402 (which may be a wrench) to rotate a nut (not shown) that clamps the chain bar 112 to the cutting head 102. By keeping the tool 402 on the power equipment 100, the tool 402 may be readily available for use.

As also shown, the tool storage area 400 may be formed on a rest element 404 attached to a main body 406 of the handle 104. The rest element 404 may provide a location on which the power equipment 100 may be rested when the power equipment 100 is not in use. The rest element 404 may also provide protection for a battery (not shown) when the battery is inserted into a battery slot 405.

The tool storage area 400 may include a number of features to securely and removably support the tool 402. The features may include a slot 410 into which a front end 412 of the tool 402 may be inserted. In some examples, the slot 410 may include a resilient component that may resiliently hold the front end 412 of the tool 402. The features may also include a channel 414 into which a middle portion 416 of the tool 402 may be inserted. In some examples, the channel 414 may include resilient components, such as springs or clamps, that may resiliently hold the middle portion 416 of the tool 402. The features may further include a pair of ears 418 that may support a back end 420 of the tool 402. The ears 418 may be semirigid to resiliently hold the back end 420 of the tool 402.

The slot 410 and the ears 418 may prevent the tool 402 from moving in the x and -x directions with respect to the handle 104. In addition, the channel 414 may prevent the tool 402 from moving in the y and -y directions with respect to the handle 104. In this regard, the features 410, 414, and 418 may support the tool 402 in a manner such that the tool 402 may be prevented from falling out of the tool storage area 400 when the power equipment 100 is rotated into any direction and/or undergoes some level of force, while also supporting the tool 402 in a manner to be readily accessible.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration only and are not meant as limitations. Many variations are possible within the scope of the claims.

## Claims

1. A power equipment comprising:
a base member;
a drive shaft configured to drive a cutting chain over a chain bar, the chain bar being attached to the base member;
an oil tank having an external edge that forms an open side of the oil tank, wherein the oil tank is mounted to the base member;
a first portion of an oil pump positioned within an interior of the oil tank;
an inlet hose housed within the oil tank, the inlet hose being configured to supply oil contained in the oil tank to the first portion of the oil pump; and
an outlet hose housed within the oil tank, the outlet hose being configured to supply oil from the first portion of the oil pump to the cutting chain.

2. The power equipment of claim 1, further comprising:
a gasket positioned between the external edge and the base member, wherein the gasket is configured to form a liquid tight seal between the external edge and the base member.

3. The power equipment of claim 1 or claim 2, wherein the oil tank comprises an oil pump hole through which the first portion of the oil pump extends from an exterior of the oil tank to an interior of the oil tank, wherein an exterior surface of the oil pump interfaces with the oil pump hole and seals the oil pump hole.

4. The power equipment of claim 3, further comprising:
an extension portion adjacent to the oil pump hole on an exterior of the oil tank; and
an O-ring gasket positioned within the extension portion and in contact with the exterior surface of the oil pump, wherein the O-ring gasket provides additional leak prevention from the oil tank.

5. The power equipment of any one of the preceding claims, wherein the drive shaft is configured to cause a second portion of the oil pump to rotate, wherein rotation of the second portion causes oil in the oil tank to be pumped from the inlet hose and through the outlet hose.

6. The power equipment of any one of the preceding claims, further comprising:
an opening through which oil is to be provided into the oil tank; and
a removable cap for closing the opening.

7. The power equipment of any one of the preceding claims, wherein the power equipment is a chainsaw and wherein an end of the outlet hose is positioned adjacent the cutting chain to supply oil from the oil tank to the cutting chain.

8. The power equipment of any one of the preceding claims, wherein the power equipment is a pole chainsaw.
